# EUROPEAN PATENT APPLICATION

(11) **EP 3 839 724 A1**
(43) Date of publication of application: **23.06.2021**
(21) Application number: 19217550.3
(22) Date of filing: 18.12.2019
(51) Int. Cl.: G06F 8/65, B60R 16/02

(54) **APPARATUSES, METHODS, AND COMPUTER PROGRAMS FOR DETERMINING A STATUS OF A VEHICLE AND FOR DETERMINING A SOFTWARE UPDATE OF A VEHICLE**

(71) Applicant: VOLKSWAGEN AKTIENGESELLSCHAFT, 38440 Wolfsburg (DE)
(72) Inventor: Aal, Andreas, 38104 Braunschweig (DE)

(57) **Abstract**

Embodiments relate to a vehicle, an apparatus, a method, and a computer program for a vehicle, and an apparatus, a method, and a computer program for a network component. The method (10) for a vehicle (100) and for determining a status of the vehicle (100) comprises registering (12) hardware components of the vehicle (100) to obtain a register of hardware components present in the vehicle (100), and determining (14) the status of the vehicle (100) based on the register of hardware components.

## Description

The present invention relates to a vehicle, an apparatus, a method, and a computer program for a vehicle, and an apparatus, a method, and a computer program for a network component. The present invention relates to determining a status of a vehicle that may be used as basis for software update determination, more particularly, but not exclusively, to a concept for maintaining a hardware/software register at a vehicle.

Programmable hardware (HW) and parametrizable software (SW) components become more and more relevant for automotive applications. Naturally, these components also provide opportunities to update features or to correct mal functions. For example, a hardware (HW) / software (SW) database may be established, which holds information on hardware components and SW components (versions) comprised in vehicles, vehicle models, respectively. Examples of such HW/SW component databases are car manufacturer databases and there are discussions on the corresponding homologation relevance of the data content.

State-of-the application SW is generally composed of standardized, re-usable SW components. The reusability of such SW components can generally be improved by using additionally parameter lists of variables that are part of such components. It is therefore possible to change the behavior of such SW components in a predefined range while not changing the SW components code itself. Therefore, a SW update may be related to changing code of SW components or by adding/reducing SW components through application code change or simply by changing the values of initialization parameters for SW components. The effort to assure a bug-free SW change is therefore clearly dependent on which of those types of SW changes is applied.

As of today, it is foreseen to store information about semiconductor and other electronics hardware components within a database. This may allow fast identification of affected vehicles in case of quality and/or security bug issues. Risk management, therefore, may dictate to have such data available. Today, such data may be uploaded by tier-1-suppliers per vehicle project applying a time-consuming process. Updates may be provided over the air. A degree of update over the air capability, as discussed, today, may be strongly dependent on the depth of HW/SW configurations of ECUs (electronic control unit) per vehicle. In worst case scenarios, vehicle specific update-packages may need to be generated.

Document US 2015/0242198 A1 discloses a computer-implemented method. The method includes receiving, from a cloud server by a vehicle, a manifest indicating network locations of software updates determined according to an interrogator log generated by the vehicle; installing update binaries retrieved from the network locations to an inactive installation of a plurality of storage installations; and setting the inactive installation to be an active installation upon vehicle restart, in place of another of the storage installation currently set as the active partition.

There is a demand for an improved concept for determining hardware component identifications in a vehicle.

This demand is addressed by the independent claims attached.

Embodiments are based on the finding that HW components can be tracked by a vehicle itself. For example, information on HW identifications may be determined and stored in a vehicle such that a status of the vehicle can be made available. Based on the status, required software updates can be determined, modified or manipulated HW/SW may be detected, etc. Embodiments may enable an in-vehicle registry for HW components.

Embodiments provide a method for a vehicle and for determining a status of the vehicle. The method comprises registering HW components of the vehicle to obtain a register of HW components present in the vehicle. The method further comprises determining the status of the vehicle based on the register of hardware components. The register of HW components may enable efficient determination on a necessity of updates.

For example, the method may further comprise registering new HW after HW replacement or HW addition to obtain an updated register and updating the status based on the updated register. Embodiments may enable vehicles to maintain an up-to-date register of its HW components.

The method may further comprise de-registering removed hardware to obtain an updated register and updating the status based on the updated register. That way, the status of the vehicle may comprise at least information on HW components, which are presently in use. Furthermore, registering software components of the vehicle along with the hardware components and determining the status further based on the registered software components may be comprised in the method. The status of the vehicle may hence reflect both, HW and SW status.

In some embodiments the method may comprise providing information on the status of the vehicle to a network component or entity. The status may be made available to a network or server entity, which may use the status for HW/SW monitoring and for update determination.

At the vehicle, the method may comprise receiving a software update from a network component/entity. The software update may comprise a plurality of software update packets. The method may further comprise selecting relevant software update packets from the plurality of software update packets based on the status of the vehicle. Embodiments may enable vehicles to select relevant update packets from larger software updates. The relevant software update packets may then be installed and the status of the vehicle may be updated accordingly. Updated registers may be maintained at the vehicle and at the network component/entity. Information on an updated status of the vehicle may hence be transmitted to the network component/entity.

Embodiments may also provide a method for a network component and for determining a software update for a vehicle. The method comprises receiving information on a status of the vehicle from the vehicle, and determining the software update based on the information on the status of the vehicle. The method further comprises providing the software update to the vehicle. Embodiments may enable efficient determination of SW update through the availability of the vehicles' statuses.

For example, the method may further comprise receiving information on an updated status of the vehicle after installation of the software update or after hardware replacement in the vehicle. As described above, by tracking the status with respect to SW and HW updates an up-to-date register may be maintained in the network.

In some embodiments the method further comprises verifying the status of the vehicle. Embodiments may enable a verification of a status of the vehicle, which may be carried out through network requests or also in the vehicle (internal verification). Verifications of the HW/SW status may help hindering HW/SW manipulations.

Embodiments also provide an apparatus for a vehicle and for determining a status of the vehicle. The apparatus comprises one or more interfaces, which are configured to communicate with hardware components of the vehicle. The apparatus further comprises a control module, which is configured to control the one or more interfaces. The control module is further configured to perform one of the methods described herein.

An apparatus for a network component/entity and for determining a software update of a vehicle is another embodiment. The apparatus comprises one or more interfaces, which are configured to communicate with the vehicle and a control module, which is configured to control the one or more interfaces. The control module is further configured to perform one of the methods described herein. Yet another embodiment is a vehicle comprising the apparatus for a vehicle.

Embodiments further provide a computer program having a program code for performing one or more of the above described methods, when the computer program is executed on a computer, processor, or programmable hardware component. A further embodiment is a computer readable storage medium storing instructions, which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a method for a vehicle;
Fig. 2 illustrates a block diagram of an embodiment of a method for a network component;
Fig. 3 illustrates block diagrams of embodiments of an apparatus for a vehicle, an apparatus for a network component, a vehicle, a network component and a system; and
Fig. 4 depicts an update scenario with multiple vehicles in an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

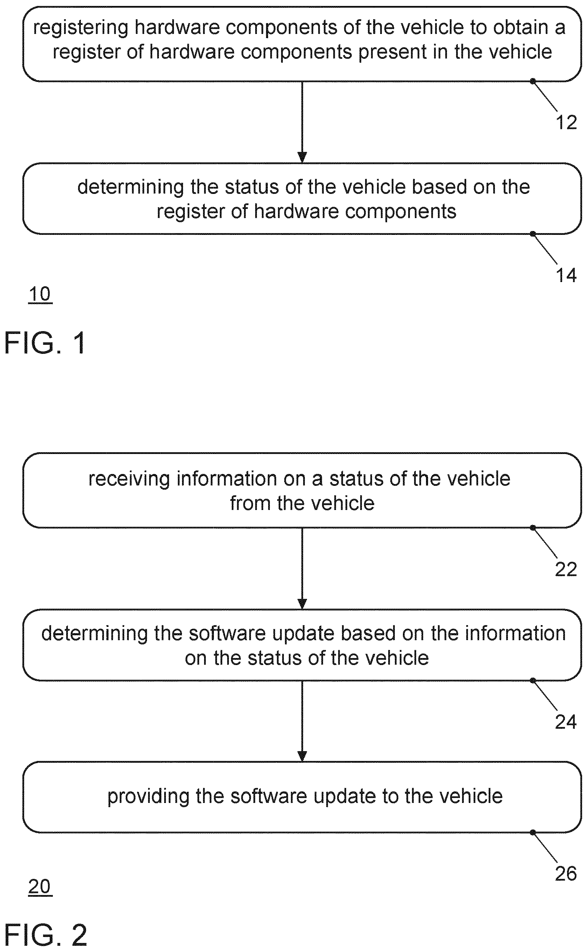

Fig. 1 illustrates a block diagram of an embodiment of a method 10 for a vehicle and for determining a status of the vehicle. The method comprises registering 12 hardware components of the vehicle to obtain a register of hardware components present in the vehicle. The method 10 further comprises determining 14 the status of the vehicle based on the register of hardware components. HW components may be identified by accordingly adapted numbers, e.g. sequence numbers, version numbers, serial numbers, etc., which will be referred to as HW-identifiers in the following. Such hardware identifiers, representing at least part of the status of the vehicle, may be used to further identify suitable software updates. Such identification of appropriate software updates may be carried out at a vehicle, e.g. in case of provision of a software update with a plurality of software update packets for a plurality of hardware components. Such identification of appropriate software updates may be likewise carried out at a network component or entity, e.g. in case of tailoring a software update to a vehicle status or HW/SW configuration.

Fig. 2 illustrates a block diagram of an embodiment of a method 20 for a network component and for determining a software update for a vehicle. The method 20 comprises receiving 22 information on a status of the vehicle from the vehicle. The method 20 further comprises determining 24 the software update based on the information on the status of the vehicle, and providing 26 the software update to the vehicle.

For example, the software update may comprise software update packets for a large number of different HW components. Some of these HW components may be present in the vehicle and others might not be present in the vehicle, e.g. they might be present in other vehicles. Based on the hardware status maintained at the vehicle the appropriate update packets can be selected. For example, a subset of software update packets may be installed at the vehicle to update one or more SW components at the respective HW components. For example, the status of the vehicle comprises information on a software status and on a hardware status of the vehicle.

In further embodiments, based on a vehicle status stored in the network it can be determined whether a vehicle needs an update or not. Update packets for multiple vehicles may then be packed into a software update. The software update may then be provided to the vehicle (e.g. also to multiple vehicles) based on the status of the vehicle and the status of the vehicle may be updated accordingly. The updating of the status may be based on a response from the vehicle indicating a successful update, e.g. an acknowledgement.

For example, the network may store a list of different HW components together with related software components. Such components may be identified by through HW-identifiers, SW-identifiers, and respective version indicators. Software suppliers may provide software updates, e.g. as part of maintenance efforts, bug fixes, security purposes etc. Based on the SW updates the database may allow identifying, which HW needs to be updated. The database may further comprise vehicle identification such that based on available SW update packets vehicles with the corresponding HW components can be identified. Now a software update can be composed that contains update packets for multiple HW components and multiple vehicles. In embodiments this software update may then be provided to the multiple vehicles, which can select the relevant update packages for their HW from the software update. In some embodiments provision of the software update may comprise transmitting the software update to the vehicle in a multicast (addressing a group of vehicles) or broadcast (addressing all vehicle) manner. At least in the broadcast case, the individual vehicle to be updated might not be identified, since the vehicle will select from the update what is relevant anyway. Because of the selection at the vehicles, multiple vehicles can be addressed with the same software update. Some vehicles might not select any update packet. This mechanism is enabled in embodiments by maintaining the above described HW register at the vehicle.

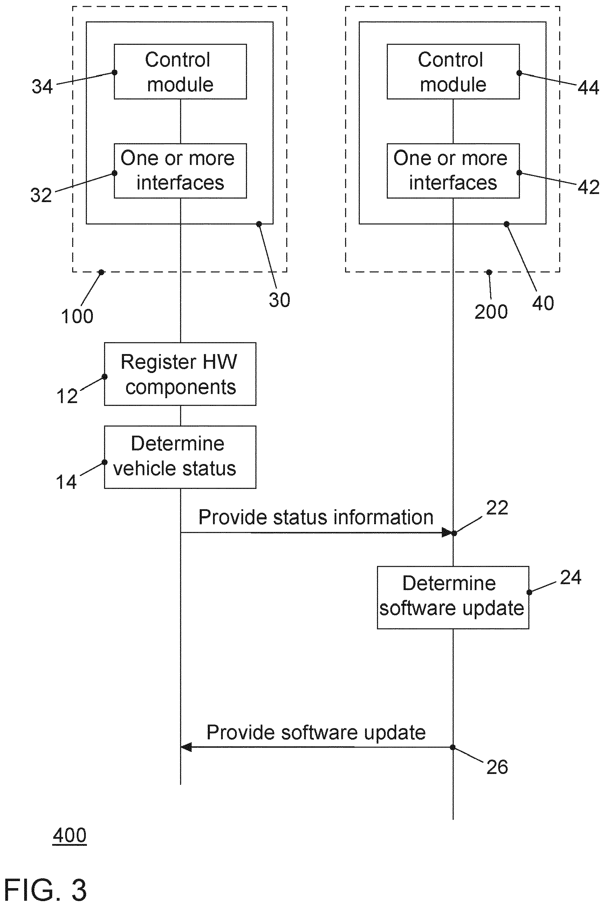

Fig. 3 illustrates block diagrams of embodiments of an apparatus 30 for a vehicle 100, an apparatus 40 for a network component/entity 200, a vehicle 100, a network component/entity 200 and a system 400. As shown in Fig. 3 an apparatus 30 for a vehicle 100 and for determining a status of the vehicle 100 comprises one or more interfaces 32 configured to communicate with a network component/entity 200. The apparatus 30 further comprises a control module 34, which is coupled to the one or more interfaces 32, and which is configured to control the one or more interfaces 32. The control module 34 is further configured to perform one of the methods 10 described herein. Fig. 3 further illustrates an embodiment of a vehicle 100 (shown in broken lines as optional from the perspective of the apparatus 30) comprising an embodiment of the apparatus 30.

Fig. 3 also shows an embodiment of an apparatus 40 for a network component/entity 200 and for determining a software update of a vehicle 100. The apparatus 40 comprises one or more interfaces 42 configured to communicate with the vehicle 100. The apparatus 40 comprises a control module 44, which is coupled to the one or more interfaces 42, and which is configured to control the one or more interfaces 42. The control module 44 is further configured to perform one of the methods 20 described herein. Fig. 3 further illustrates an embodiment of a network component/entity 200 (shown in broken lines as optional from the perspective of the apparatus 40) comprising an embodiment of the apparatus 40. Yet another embodiment is a system 400 comprising embodiments of the vehicle 100 and the network component/entity 200.

In embodiments, the one or more interfaces 32, 42 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 32, 42 may comprise further components to enable according communication in system 400, which may be a mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 32, 42 may be coupled to one or more antennas, which may correspond to any transmit and/or receive antennas, such as horn antennas, dipole antennas, patch antennas, sector antennas etc. In some examples the one or more interfaces 32, 42 may serve the purpose of transmitting or receiving or both, transmitting and receiving, information, such as information related to capabilities, control information, payload information, application requirements, trigger indications, requests, messages, data packets, acknowledgement packets/messages, etc.

As shown in Fig. 3 the one or more interfaces 32, 42 are coupled to the control module 34, 44 at the apparatus 30, 40. In embodiments a control module 34, 44 may be implemented using one or more processing units, one or more processing devices, any means for processing, such as a processor, a computer or a programmable hardware component being operable with accordingly adapted software. In other words, the described functions of the control modules 34, 44 may as well be implemented in software, which is then executed on one or more programmable hardware components. Such hardware components may comprise a general purpose processor, a Digital Signal Processor (DSP), a micro-controller, etc.

In embodiments the one or more interfaces 32, 42 can be configured to wirelessly communicate in the communication system 400, e.g. as separate interfaces for communicating with hardware component for registration and within the communication system 400. The communication system 400, as shown in the Fig. 3, may, for example, correspond to one of the Third Generation Partnership Project (3GPP)-standardized mobile communication networks, where the term mobile communication system is used synonymously to mobile communication network. The mobile or wireless communication system 400 may correspond to a mobile communication system of the 5th Generation (5G, or New Radio (NR)) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Service provision may be carried out by a network component such as a base station transceiver, a relay station or user equipment (UE). A vehicle may correspond to any conceivable means for transportation, e.g. a car, a bike, a motorbike, a van, a truck, a bus, a ship, a boat, a plane, a train, a tram, etc. The network component/entity may be part of the mobile communication system or it may be a computer or server located outside the mobile communication system but using the mobile communication system as part of a greater system 400 to communicate with the vehicle 100.

In embodiments vehicles 100 have HW and SW components. The SW components, which are to be updated may comprise any computer programs, instructions, codes, etc. that determine a function or operation of an associated HW component. Examples of such SW also include firmware (of semiconductor components), operating systems, applications, programs, etc. A firmware update may be referred to as a semiconductor HW upgrade, as the component HW behavior is changed. In embodiments SW updates may be carried out to eliminate errors, bugs, security issues, or to introduce new or improve existing features.

Fig. 3 further illustrates how a software update is carried out based on a vehicle status at a vehicle 100 in an embodiment. At the vehicle 100 HW components are registered 12 and an according table or register is made available. Based on the registered HW component the status of the vehicle 100 is determined 14. As shown in Fig. 3 information of the status is then provided by the vehicle 100 and received 22 at the network component 200. In this embodiment the method 10 comprises comprising providing information on the status of the vehicle 100 to the network component 200. A software update is then determined 24 based on the received status information. The update can then be provided 26 to one or more vehicles 100. Hence, the method 10 may comprise receiving a software update from the network component 200. For example, the software update comprises a plurality of software update packets and the method 10 further comprises selecting relevant software update packets from the plurality of software update packets based on the status of the vehicle 100. Because of the registered HW components at the vehicle, the vehicle 100 is enabled to carry out an appropriate selection of software update packets.

The network component 200 obtains 22 a vehicle status. This may be based on information obtained from the vehicle itself, from a vehicle manufacturer or from a component manufacturer. For example, an initial setup of a vehicle may be provided by the manufacturer. The network component 200 may then determine 24 whether a software update is available or necessary based on the vehicle status. In case an update is to be carried out, the software update potentially including a plurality of software update packets is provided 26 to the vehicle 100. At the vehicle 100 the software update is received. Based on the vehicle's status update packets are selected and installed. After installing an updated status can be transmitted to the network component 200, which accordingly receives the status update. The method 10 hence comprises installing the relevant software update packets and updating the status of the vehicle 100 accordingly in this embodiment. Information on an updated status of the vehicle may then be transmitted to the network component 200.

From the perspective of the network component 200 the method 20 may comprise receiving information on an updated status of the vehicle 100 after installation of the software update or after hardware replacement in the vehicle 100. Having such information available on the network side may enable efficient verification means. E.g. the network may trigger status inspection or review in order to verify that no SW and/or HW modification or manipulation took place. The method 20 may hence further comprise verifying the status of the vehicle receiving information on an updated status of the vehicle after hardware replacement in the vehicle.

In the life cycle of the vehicle 100 multiple HW and SW updates or replacements may take place. In embodiments the method 10 may further comprise registering new hardware after hardware replacement or hardware addition to obtain an updated register and updating the status based on the updated register. Such updated status information may then be provided to the network component 200, as well. Likewise, the method 10 may comprise de-registering removed hardware to obtain an updated register and updating the status based on the updated register. In further embodiments, the method 10 may comprise registering software components of the vehicle along with the hardware components and determining the status further based on the registered software components. In some embodiments the status of the vehicle 100 may hence represent both, HW and SW status.

For example, car OEM (original equipment manufacturer) semiconductor databases may be used to store a status (HW/SW) of a car. Such databases might not be public but company proprietary. However, with a data acquisition process from tier 1, data availability may be limited as providing of such data might not be inherent and automatically implemented within the supply chain. A tool chain and data format might not be defined/standardized and may vary from car OEM to car OEM. Moreover, high traceability efforts may be necessary, e.g. on what HW/SW configuration is in one particular car. In case of an incident (urgent update), long loops to tier 1 may result to confirm the actual details of a HW content in an ECU. In the context of increasing cyber security requirements - such long "status check loops" with the supply chain might neither be acceptable nor affordable and could lead to a loss of certification.

Embodiments may enable a quicker and more universal update procedure by maintaining reliable status information at the vehicle 100. Since an update may comprise multiple update packets, such an update may be transmitted to multiple vehicles. Since the vehicles are enabled to select from the multiple update packets which ones are the ones needed, the updates do not need to be tailored to the individual vehicles anymore.

In embodiments an optimization of HW/SW-databases and corresponding support infrastructure (OEM Semiconductor related internal organization combined from purchase, logistics, quality and technical development personnel) including audits at tier 1 could be carried out. A dedicated selection of HW components under certain release criteria and only allowing such components to be
selected by tier 1s "without additional high effort assurance processes" may be established. However, with the "intelligence" to properly select in the vehicle, the updating process may be simplified in embodiments.

Embodiments may make use of a universal HW architecture that allows integration of HW using a standard interface. An example can be found in the vehicle integration scheme for electrical components, patent application EP 19171138.1, which is incorporated by reference. In embodiments storage devices may be added or potential system on a chip (SoC) memory banks may be used in vehicle.

For example, an automobile electronic system may be used in embodiments, which comprises two or more domain computer centers (DCC) for embedding electronic units forming parts of the automobile electronic system. The two or more domain computer centers are interconnected by a wired and/or wireless electrical vehicle system for communication between them. The DCC may comprise two or more module housings, which accommodate at least one of said electronic units. The domain computer centers comprise two or more plug-in pockets and each of the module housings is plugged within respective one plug-in pocket. A plug-in pocket is embedded within a respective domain computer center by at least one apparatus for decoupling a respective plugged module housing from environmental factors. Further, the two or more domain computer centers may be interconnected by a wired and/or wireless electrical vehicle system for communication between them as well as with sensor and actuator units distributed around the vehicle chassis.

A corresponding domain computer center suitable for the afore-mentioned automobile electronic system may be constructed for embedding electronic units forming parts of the automobile electronic system and to be interconnected with at least a further of such domain computer center by a wired and/or wireless electrical vehicle system for communication between them. The domain computer center may comprise two or more plug-in pockets, into each of which a module housing accommodating at least one of said electronic units may be plugged-in. A plug-in pocket may be embedded within the domain computer center by at least one apparatus for decoupling a respective plugged module housing from environmental factors.

A module housing for an automobile electronic system suitable for the afore-mentioned automobile electronic system may be used. The module housing may accommodate at least one electronic unit and being designed to be plugged-in in a plug-in pocket of a domain computer center, in particular according to the afore mentioned one, for embedding electronic units forming parts of the automobile electronic system interconnecting at least two or more of such domain computer centers by a wired and/or wireless electrical vehicle system for communication between them.

Thus, by accommodating the electronic units into module housings, which are then plugged in pockets embedded within domain computer centers by at least one apparatus for decoupling a respective plugged module housing from environmental factors, with the domain computer centers are connected to an electrical vehicle system for communication there between, the capability of integration even of electronic units within automobile electronic system is achieved in an easy way.

By provision of such plug-in pockets, the performances of domain computer centers can be easily changed or extended with regard to hardware by only replacing module housings accommodating respective different electronic units thereby even enabling a flexible enhancement of software scalability and memory capabilities of respective individual domain computer centers. Moreover, tracking HW components may be further simplified by defining a common protocol used for HW registration at an apparatus 30.

In case of HW replacement embodiments may still enable efficient SW update mechanisms even for the replaced HW at the vehicle 100. For example, the vehicle 100 may comprise hardware with a hardware code and software with software code. These codes may change during the life cycle of the vehicle, e.g. through replacements and/or updates. Information on the hardware code and the software code may be comprised in the status of the vehicle 100. The selecting of update packets may comprise matching codes provided with the software update with the hardware codes and software codes of the vehicle 100. In embodiments, information may be stored and/or communicated in an encrypted way. For example, the status of the vehicle may be stored in an encrypted manner such that manipulation can be detected. Selection of update packets may comprise decrypting an encrypted status, e.g. a bill of material (BOM) stored in the vehicle 100, to obtain the status of the vehicle 100.

In an embodiment the SW/HW status code (e.g. a reference to the HW BOM or complete BOM ID list and SW version) of each high-integration ECU (electronic control unit) is stored within a SoC or connected storage component connected to the SoC of that ECU, forming a register of HW and/or SW components. General update packages from the main cloud (e.g. network entity 200) will be downloaded to the in-car cloud (ICC, in-car communication) that may comprise at least one DCC. For example, an operating system that runs on a domain computer center (DCC) in the vehicle 100 may automatically select those update packages that match to the SW/HW status code, perform the update, and update the new status within the SoC and storage component and transfer the new status to the main cloud (network entity 200). Therefore, any HW/SW status of each vehicle is fully stored in the main cloud. In case of HW changes, the status may be automatically transferred to the main cloud (from the vehicle 100 to the network entity 200). Moreover, software update packets for the new hardware can then be selected at the vehicle 100.

Classical database approaches may be obsolete in case that a supplier stores a complete encrypted BOM in a storage device while the decryption is only possible by the combination of a SoC and accordingly adapted features of the operating system at the vehicle 100. In some embodiments the fully BOM would then be automatically available within the in-car and main cloud. In some embodiments the status of the vehicle is encrypted and the method 10 may comprise en-/decrypting the status of the vehicle. In embodiments any ciphering or encryption algorithm may be used for this purpose such that manipulations or modifications in the vehicle are hindered. For example, the decrypting uses a dedicated decryption module of the vehicle to decrypt the status of the vehicle. Such a decryption module may be dedicated to securing the HW and/or SW status of the vehicle and it may be integrated into a HW concept of the vehicle. Accordingly, the method 10 may comprise storing encrypted information on a current hardware and/or software status of the vehicle as a register.

For example, the vehicle 100 may comprise components that allow encrypted storage of the status (e.g. BOM and SW version) in one or more memory devices accessible via a SoC component, e.g. in an ECU. Embodiments may enable an automatic and simplified update package selection process - SW selection out of what is matching to the actual HW at the vehicle 100. Embodiments may avoid a complicated update package pre-preparation and logistic process.

In further embodiments information on the (initial) status of the vehicle 100 may be received from a component manufacturer of the vehicle 100 and/or from the vehicle 100. For example, an initial status of a vehicle 100 (during or after production) may be given by the initial status of its components. Information about the initial components and their status may be available at or through the respective component manufacturers. In some embodiments the component manufacturers may provide initial status information for storage at the vehicle 100 and/or at the network entity 200. The respective status information may be updated once an update packet has been successfully installed at the vehicle 100.

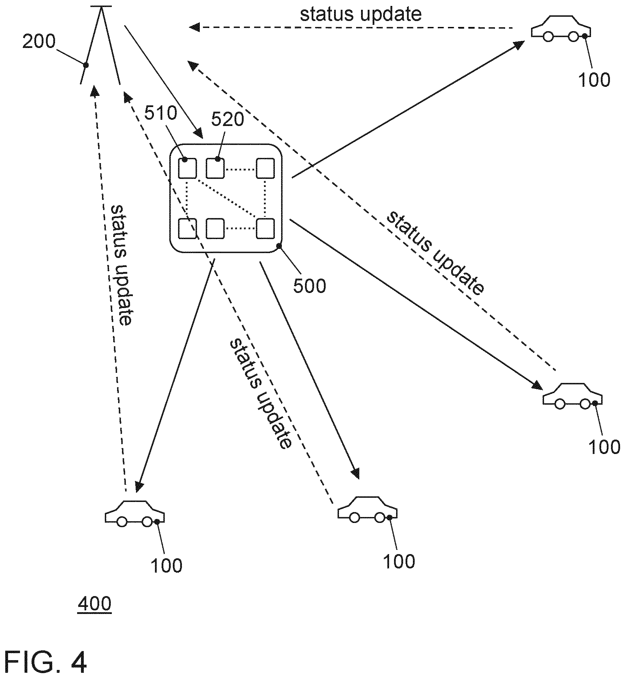

Fig. 4 depicts an update scenario with multiple vehicles 100a, 100b, 100c, and 100d in an embodiment. A network component/entity 200 is symbolized as a base station of a mobile communication system 400 but may represent any update server. As the arrows in Fig. 4 indicate, a software update 500 is provided to multiple vehicles 100a, 100b, 100c, and 100d. The software update 500 comprises a plurality of software update packets 510, 520, of which only some are relevant per vehicle. The vehicles 100a, 100b, 100c, and 100d then select from the software update 500 the relevant packets and update their software based on the HW registers maintained at the individual vehicles. This way, an universal software update 500 can be provided to a plurality of vehicles without having to tailor software updates to the individual vehicle's needs. After successful installation of the relevant update packets the vehicles also update their status and report status information back to the network component/entity 200 (e.g. cloud/server). The network component/entity 200 then knows the updated status and can also determine whether a vehicle should be part of a subsequent software update, i.e. whether a vehicle should check a subsequent software update for relevant update packages. The network component/entity 200 may also determine a roll-out status of an update, e.g. an absolute or relative number of updated and/or outdated vehicles.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a (non-transitory) computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### List of reference signs

- 10: method for a vehicle and for determining a status of the vehicle
- 12: registering hardware components of the vehicle to obtain a register of hardware components present in the vehicle
- 14: determining the status of the vehicle based on the register of hardware components
- 20: method for a network component and for determining a software update for a vehicle
- 22: receiving information on a status of the vehicle from the vehicle
- 24: determining the software update based on the information on the status of the vehicle
- 26: providing the software update to the vehicle
- 30: apparatus for a vehicle
- 32: one or more interfaces
- 34: control module
- 40: apparatus for a network component
- 42: one or more interfaces
- 44: control module
- 100: vehicle
- 100a: vehicle
- 100b: vehicle
- 100c: vehicle
- 100d: vehicle
- 200: network component
- 400: communication system
- 500: software update
- 510: update packet
- 520: update packet

## Claims

1. A method (10) for a vehicle (100) and for determining a status of the vehicle (100), the method (10) comprising
registering (12) hardware components of the vehicle (100) to obtain a register of hardware components present in the vehicle (100); and
determining (14) the status of the vehicle (100) based on the register of hardware components.

2. The method (10) of claim 1, further comprising registering new hardware after hardware replacement or hardware addition to obtain an updated register and updating the status based on the updated register.

3. The method (10) of one of the preceding claims, further comprising de-registering removed hardware to obtain an updated register and updating the status based on the updated register.

4. The method (10) of one of the preceding claims, further comprising registering software components of the vehicle (100) along with the hardware components and determining the status further based on the registered software components.

5. The method (10) of one of the preceding claims, further comprising providing information on the status of the vehicle (100) to a network component (200).

6. The method (10) of one of the preceding claims, further comprising receiving a software update from a network component (200), the software update comprising a plurality of software update packets, the method (10) further comprising selecting relevant software update packets from the plurality of software update packets based on the status of the vehicle (100).

7. The method (10) of claim 6, further comprising installing the relevant software update packets and updating the status of the vehicle (100) accordingly.

8. The method (10) of claim 7, further comprising transmitting information on an updated status of the vehicle (100).

9. A method (20) for a network component (200) and for determining a software update for a vehicle (100), the method (20) comprising
receiving (22) information on a status of the vehicle (100) from the vehicle (100);
determining (24) the software update based on the information on the status of the vehicle (100), and
providing (26) the software update to the vehicle (100).

10. The method (20) of claim 9 further comprising receiving information on an updated status of the vehicle (100) after installation of the software update or after hardware replacement in the vehicle (100).

11. The method (20) of one of the claims 9 or 10, further comprising verifying the status of the vehicle (100).

12. An apparatus (30) for a vehicle (100) and for determining a status of the vehicle (100), the apparatus (30) comprising
one or more interfaces (32) configured to communicate with hardware components of the vehicle (100); and
a control module (34) configured to control the one or more interfaces (32), wherein the control module (34) is further configured to perform one of the methods (10) of claims 1 to 8.

13. An apparatus (40) for a network component (200) and for determining a software update of a vehicle (100), the apparatus (40) comprising
one or more interfaces (42) configured to communicate with the vehicle (100); and
a control module (44) configured to control the one or more interfaces (42), wherein the control module (44) is further configured to perform one of the methods (20) of claims 9 to 11.

14. A vehicle (100) comprising the apparatus (30) of claim 12.

15. A computer program having a program code for performing at least one of the methods (10; 20) of claims 1 to 11, when the computer program is executed on a computer, a processor, or a programmable hardware component.
